# EUROPÄISCHE PATENTSCHRIFT

(11) **EP 1 333 194 B1**
(45) Veröffentlichungstag und Bekanntmachung des Hinweises auf die Patenterteilung: **10.10.2007**
(21) Anmeldenummer: 03002074.7
(22) Anmeldetag: 30.01.2003
(51) Int. Cl.: F16H 37/08

(54) **Getriebeanordnung**
Transmission arrangement
Arrangement d' une transmission

(30) Priorität: 05.02.2002 DE 10204711; 28.11.2002 DE 10255748; 23.12.2002 DE 10261514
(43) Veröffentlichungstag der Anmeldung: 06.08.2003
(73) Patentinhaber: Glöckler, Dieter, 89081 Ulm (DE)
(72) Erfinder: Glöckler, Dieter, 89081 Ulm (DE)
(74) Vertreter: Koch-Huld, Annegret Christa

(56) Entgegenhaltungen:
- EP-A- 0 308 078
- WO-A-94/10483
- DE-A1- 3 202 591
- DE-A1- 19 755 612
- DE-B- 1 185 883
- GÜNTER GACKSTETTER: "Leistungsverzweigung bei der stufenlosen Drehzahlregelung mit vierwelligen Planetengetrieben" VDI-ZEITSCHRIFT, Bd. 108, 1966, Seiten 210-214, XP008051968

## Beschreibung

Die Erfindung betrifft eine Getriebeanordnung, insbesondere eine Überlagerungsgetriebeeinheit mit den Merkmalen aus dem Oberbegriff des Anspruches 1.

Getriebeanordnungen in Form von Leistungsverzweigungsgetrieben oder Überlagerungsgetrieben sind in einer Vielzahl von Ausführungen bekannt. Stellvertretend wird auf die Druckschrift DE 197 55 612 A1 verwiesen. Diese umfaßt eine Getriebeeingangswelle, ein mit Getriebeeingangswelle und mit der Getriebeausgangswelle gekoppeltes stufenloses Übersetzungsgetriebe in Form eines Zugmittelgetriebes, welches eine Eingangswelle und eine Ausgangswelle aufweist, wobei die Eingangswelle mit der Getriebeeingangswelle drehfest verbunden ist, eine feste Übersetzungsstufe sowie ein Überlagerungsgetriebe mit einer ersten Eingangsstufe, welche mit der Ausgangswelle des stufenlosen Übersetzungsgetriebes drehfest verbunden ist. Ferner ist eine zweite Eingangsstufe vorgesehen, welche wahlweise mittels einer ersten Kupplung über die feste Übersetzungsstufe mit der Getriebeeingangswelle verbindbar ist und eine Ausgangsstufe, welche drehfest mit der Getriebeausgangswelle gekoppelt ist. Hierbei ist die feste Übersetzungsstufe antriebsseitig drehfest mit der Getriebeeingangswelle gekoppelt und bezüglich der festen Übersetzungsstufe abtriebsseitig die erste Kupplung derart angeordnet, daß diese wahlweise die zweite Eingangsstufe des Überlagerungsgetriebes abtriebsseitig mit dem festen Übersetzungsgetriebe verbindet.

Mit dieser Lösung ist es möglich, auf einfache Art und Weise ein betriebssicheres Mehrbereichsgetriebe zur Verfügung zu stellen. Diese Lösung bietet den Vorteil, dass bei einem durch Kombination eines stufenlosen Übersetzungsgetriebes mit einem Überlagerungsgetriebe geschaffenen Mehrbereichsgetriebe mit einem sogenannten Geared-Neutral Bereich hohe Eingriffsgeschwindigkeiten im Bereich der ersten Kupplung vermieden werden, da diese an einer Stelle nach einer entsprechenden Übersetzung der hohen Drehzahl der Antriebswelle auf die niedrige Drehzahl durch die feste Übersetzungsstufe angeordnet ist. Dies reduziert den Verschleiß und erhöht die Lebensdauer der ersten Kupplung. Ein wesentlicher Nachteil besteht jedoch in der direkten Kopplung zwischen stufenlosem Getriebe, auch CVT genannt, und Getriebeeingang und damit der Antriebswelle. Das stufenlose Getriebe ist somit immer an die Drehzahl der Antriebsmaschine gekoppelt. Eine Entlastung des Überlagerungsgetriebes in einem Bereich höherer Drehzahlen der Abtriebswelle bzw. niedrigerer Übersetzungsverhältnisse des stufenlosen Übersetzungsgetriebes wird dadurch erzielt, daß eine zweite Kupplung vorgesehen wird, welche wahlweise die erste Eingangsstufe mit der Ausgangsstufe des Überlagerungsgetriebes verbindet. Dadurch wird eine starre Verbindung zwischen Ausgangswelle des stufenlosen Übersetzungsgetriebes und der Abtriebswelle geschaffen, wodurch das Überlagerungsgetriebe im Drehmomentenfluß überbrückt ist. Allerdings zeichnet sich diese Lösung durch einen große Bauteilanzahl und einen hohen steuerungstechnischen Aufwand aus, da die einzelnen Kupplungen zusätzlich zum CVT anzusteuern sind. Ein weiteres wesentliches Problem der Leistungsübertragung über das stufenlose Übersetzungsgetriebe besteht darin, daß dieses aufgrund entsprechender Dimensionierung nur ein maximal zulässiges Moment übertragen kann, ansonsten sind bei sehr hohen Belastungen unzulässige Schlupfzustände zu beobachten, die zu einem erhöhten Verschleiß am Zugmittel führen. Eine Getriebeanordnung mit den Merkmalen des Oberbegriffs des Anspruchs 1 ist aus Günter Gackstetter; "Leistungsverzweigung bei der stufenlosen Drehzahlregelung mit vierwelligen Planetengetrieben", VDI-Zeitschrift, Bd. 108, 1966, Seiten 210-214, XP008051968, bekannt.

Der Erfindung liegt daher die Aufgabe zugrunde, eine Getriebebaueinheit der Eingangs genannten Art derart weiterzuentwickeln, daß dieser Nachteil vermieden wird. Insbesondere ist die Belastung des Zugmittelgetriebes zu reduzieren und damit die Übertragbarkeit auch hoher Leistungen über dieses zu sichern und in optimaler Weise zu gewährleisten, wobei die zu entwickelnde Lösung sich durch einen geringen konstruktiven und steuerungstechnischen Aufwand auszeichnen soll. Des Weiteren ist eine hinsichtlich der Anzahl unterschiedlich ausgelegter Bauteile und bezüglich des erforderlichen Bauraumes optimierte Getriebebaueinheit zu erstellen.

Die erfindungsgemäße Lösung ist durch die Merkmale des Anspruches 1 charakterisiert. Vorteilhafte Ausgestaltungen sind jeweils in den Unteransprüchen wiedergegeben.

Gemäß der erfindungsgemäßen Ausführungsform ist die Getriebebaueinheit als Überlagerungsgetriebeeinheit ausgeführt. Diese umfaßt einen Getriebeeingang und einen Getriebeausgang, femer zwei zwischen Getriebeeingang und Getriebeausgang angeordnete und miteinander gekoppelte Überlagerungsgetriebe. Jedes der beiden Überlagerungsgetriebe ist dabei als dreiwelliges Planetengetriebe ausgeführt. Beide sind miteinander zu einem vierwelligen Planetengetriebe gekoppelt. Zwischen dem ersten Überlagerungsgetriebe und dem zweiten Überlagerungsgetriebe ist ferner ein stufenloses Getriebe in Form eines Zugmittelgetriebes zwischengeschaltet. Jedes Planetengetriebe umfaßt ein Sonnenrad, ein Hohlrad, Planetenräder und einen Steg. Die einzelnen Wellen werden dabei vom Sonnenrad, Hohlrad oder Steg des jeweiligen Überlagerungsgetriebes gebildet. Der Getriebeeingang ist dabei mit einer ersten Welle des ersten Überlagerungsgetriebes und einer ersten Welle des zweiten Überlagerungsgetriebes drehfest verbunden. Der Getriebeausgang ist mit einer zweiten Welle des ersten Überlagerungsgetriebes und einer zweiten Welle des zweiten Überlagerungsgetriebes drehfest verbunden. Die Kopplung der beiden dreiwelligen Planetengetriebe zu einem vierwelligen Planetengetriebe erfolgt dabei durch Kopplung der ersten und zweiten Wellen von ersten und zweiten Überlagerungsgetriebe. Die Anordnung des stufenlosen Getriebes in Form eines Zugmittelgetriebes erfolgt zwischen den dritten Wellen von erstem und zweitem Überlagerungsgetriebe. Der Begriff Welle ist dabei funktional zu verstehen, wobei unter diesem entweder die einzelnen Elemente der Planetengetriebe - Sonnenrad, Hohlrad oder Steg oder die mit diesen drehfest gekoppelten Elemente, beispielsweise in Form von Wellen oder Hohlwellen, zu verstehen sind. Die einzelnen Wellen übernehmen dabei je nach Betriebszustand die Funktion von Eingängen und Ausgängen. So umfaßt das erste Überlagerungsgetriebe bei Leistungsübertragung von der Getriebeeingangswelle zur Getriebeausgangswelle über das stufenlose Getriebe einen Eingang und zwei Ausgänge. Der Eingang wird dabei von der ersten Welle gebildet, während der erste Ausgang der mit dem stufenlosen Getriebe wenigstens mittelbar verbunden ist, von der dritten Welle gebildet wird und der zweite, mit der Getriebeausgangswelle drehfest gekoppelte Ausgang von der zweiten Welle. Das zweite Überlagerungsgetriebe umfaßt in diesem Betriebszustand einen Eingang und einen Ausgang, wobei der Eingang ebenfalls mit der Getriebeeingangswelle gekoppelt ist und von der ersten Welle des zweiten Überlagerungsgetriebes gebildet wird und der Ausgang von der zweiten Welle. Die dritte Welle ist mit dem stufenlosen Getriebe verbunden. Ferner sind Mittel zur Änderung des Übersetzungsverhältnisses am Getriebe vorgesehen. Erfindungsgemäß weist eines der beiden Überlagerungsgetriebe - erstes oder zweites Überlagerungsgetriebe - paarweise miteinander kämmende Planetenräder zwischen Sonnenrad und Hohlrad auf. Diese sind am Steg drehbar gelagert. Die paarweise miteinander kämmenden Planetenräder werden auch als doppelläufige Planetenräder bezeichnet. Aufgrund der Ausführung eines der als Planetengetriebe ausgebildeten zweiten Überlagerungsgetriebes mit paarweise miteinander kämmenden Planetenrädern, welche auch als doppelläufige Planetengetriebe bezeichnet werden, wird zumindest für einen Teilbereich des Gesamtbetriebsbereiches garantiert, daß das CVT mit maximaler Umlaufgeschwindigkeit arbeitet, wobei auch ein Wechsel bezüglich des Übersetzungsverhältnisses an den einzelnen Scheiben bei maximaler Motordrehzahl stattfinden kann, d. h. ein über Null-Drehen möglich ist und somit mit dem erfindungsgemäßen Getriebe neben einem Geared-Neutral auch eine Drehrichtungsänderung zu realisieren ist. Die doppelläufige Ausführung bietet den Vorteil, dass bei einer durch diese bedingte Vergrößerung der Drehzahl am mit dem stufenlosen Getriebe gekoppelten Ausgang, insbesondere Hohlrad dieses Planetengetriebes eine entsprechend der Auslegung des anderen Planetengetriebes bedingte Verringerung am mit dem stufenlosen Getriebe gekopppelten Ausgang des jeweils anderen Planetengetriebes, insbesondere Hohlrad bewirkt.

Gemäß einer besonders vorteilhaften Ausgestaltung für die beiden Planetengetriebe gilt, dass vorzugsweise jeweils die Sonnenräder und die Hohlräder gleich dimensioniert sind. Dies gilt hinsichtlich ihrer Abmessungen in radialer Richtung, insbesondere des Durchmessers, und bezüglich der Verzahnung, insbesondere Zähnezahl. Eines der beiden Überlagerungsgetriebe-erstes oder zweites Überlagerungsgetriebe - weist die paarweise miteinander kämmenden Planetenräder zwischen dem Sonnenrad und dem Hohlrad auf. Diese sind am Steg drehbar gelagert. Dabei kämmt ein erstes der Planetenräder mit dem Sonnenrad und ein zweites der Planetenräder direkt mit dem Hohlrad. Die Planetenräder des jeweils anderen Überlagerungsgetriebes ergeben sich hinsichtlich ihrer Auslegung aufgrund der Ausgestaltung von Sonnenrad und Hohlrad bei gleicher Auslegung in beiden Planetenradsätzen. Entsprechend der Zuordnung der einzelnen Wellen als erste, zweite oder dritte Welle erfolgt die Kopplung mit dem stufenlosen Getriebe in Form des Zugmittelgetriebes über Verbindungsgetriebe in Form von Übersetzungsgetriebe, beispielsweise in Form von Stirnradsätzen. Diese sind vorzugsweise ebenfalls gleich, d. h. identisch dimensioniert. Des Weiteren sind dem stufenlosen Getriebe, insbesondere dem Zugmittelgetriebe, Mittel zur Änderung des Übersetzungsverhältnisses zugeordnet. Bei Ausführung der Planetengetriebe mit jeweils gleich dimensionierten Sonnen- und Hohlrädem und den paarweisen Planetenrädern 1 zu 1 und gleichen Stirnrädern gemäß einer besonders vorteilhaften Ausgestaltung wird sogar in jedem Betriebszustand garantiert, dass das CVT mit konstanter Drehzahl, d. h. auch maximaler Umlaufgeschwindigkeit bei maximaler Motordrehzahl arbeitet. Diese Ausführung bietet neben den funktionalen Vorteilen auch Vorteile hinsichtlich des erforderlichen Bauraumes, da die einzelnen Überlagerungsgetriebe in radialer Richtung hinsichtlich des benötigten Bauraumes sich nicht voneinander unterscheiden und ferner auf gleiche Bauelemente zurückgegriffen werden kann. Die paarweise miteinander kämmenden Planetenräder können dabei je nach gewünschtem Effekt mit einer Übersetzung vorzugsweise von 1 zu 1 oder aber einer anderen Übersetzung ausgelegt werden, wobei eine Übersetzung im Bereich von 1 zu 0,9 bis 1,2 denkbar ist.

Die Auslegung von Hohlrad und Sonnenrad der beiden Planetenräder kann beliebig erfolgen, wobei jedoch dies bei der Gesamtauslegung, insbesondere der Verbindung zwischen den Ausgängen und dem stufenlosen Getriebe mit zu berücksichtigen ist. Bevorzugt aus funktionalen und baulichen Gründen wird daher eine im Wesentlichen gleiche Dimensionierung.

Gemäß einer besonders vorteilhaften Ausführung werden die ersten Wellen der beiden Überlagerungsgetriebe jeweils vom Steg des einzelnen Überlagerungsgetriebes gebildet. Die zweiten Wellen der beiden als Planetengetriebe ausgebildeten Überlagerungsgetriebe werden jeweils von den Sonnenrädern der einzelnen Planetengetriebe gebildet. Die dritten Wellen, welche wenigstens mittelbar mit dem Zugmittelgetriebe gekoppelt sind, werden jeweils von den Hohlrädem gebildet. Bei Leistungsübertragung über das stufenlose Getriebe vom Getriebeeingang zum Getriebeausgang betrachtet, bildet dabei der Steg des ersten Überlagerungsgetriebes den Eingang des ersten Überlagerungsgetriebes. Der erste Ausgang, welcher mit der Getriebeausgangswelle gekoppelt ist, wird dann vom Sonnenrad und der zweite Ausgang vom Hohlrad des ersten Überlagerungsgetriebes gebildet.

Die Lösung ist dadurch charakterisiert, daß keine direkte drehfeste Kopplung zwischen der Getriebeeingangswelle und dem stufenlosen Getriebe, insbesondere dem Eingang des stufenlosen Getriebes existiert, sondern diese über ein Überlagerungsgetriebe realisiert wird. Damit wird zwar aufgrund der Kopplung zwischen Überlagerungsgetriebe und stufenlosem Getriebe über eine Stufe ein festes Übersetzungsverhältnis erzielt, allerdings sind die einzelnen Größen-Drehzahl und Moment - immer abhängig von den Verhältnissen am ersten Überlagerungsgetriebe, d. h. bei Leistungsübertragung über das Zugmittelgetriebe hat dessen Größe Einfluß auf die Drehzahl an der Getriebeausgangswelle, wobei diese wiederum in Rückwirkung Einfluß auf das erste Überlagerungsgetriebe ausübt und damit die Höhe der übertragbaren Leistung über das erste Überlagerungsgetriebe und die Drehzahl der dritten Welle des ersten Überlagerungsgetriebes. Dadurch wird erreicht, daß unnötig hohe Belastungen des stufenlosen Getriebes bei höheren Drehzahlen vermieden werden. Der Eingang des stufenlosen Getriebes ist somit nicht mehr direkt an die Drehzahl der Antriebsmaschine gekoppelt. Die Drehzahl am Getriebeausgang der Überlagerungsgetriebeeinheit kann durch Steuerung des stufenlosen Getriebes verändert werden.

Zwar nutzt die erfindungsgemäße Lösung eine aus der Druckschrift Gackstetter, G:" Leistungsverzweigung bei der stufenlosen Drehzahlregelung mit vierwelligen Planetenradgetrieben", VDI-Zeitschrift, 1966, Bd. 108, S. 210-214, bekannte Koppelstruktur, allerdings kann durch die alleinige Anwendung dieser Koppelstruktur ohne doppelläufige Ausführung der Planetenräder die Aufgabe noch nicht gelöst werden.

Die Kopplung des Hohlrades mit dem Eingang des stufenlosen Getriebes erfolgt über ein Verbindungsgetriebe in Form eines Übersetzungsgetriebes, beispielsweise eines Stimradsatzes, wobei dieser vom Hohlrad und einem drehfest mit der Eingangswelle des stufenlosen Getriebes gekoppelten Stirnrad gebildet wird. Das erste Überlagerungsgetriebe fungiert in diesem Zustand als Verteilergetriebe, während das zweite Überlagerungsgetriebe bei nicht stillstehender Getriebeausgangswelle als Summiergetriebe fungiert. Der Eingang des zweiten Überlagerungsgetriebes wird dabei ebenfalls vom Steg gebildet, während ein weiteres Element in Form des Hohlrades über ein Verbindungsgetriebe, vorzugsweise in Form eines Stirnradsatzes, mit dem Ausgang des stufenlosen Getriebes verbunden ist und in diesem Betriebszustand als Eingang fungiert. Der Ausgang wird auch hier vom Sonnenrad gebildet. Beide Überlagerungsgetriebe sind somit miteinander gekoppelt, d. h. die Sonnenräder und die Stege sind miteinander drehfest verbunden.

Das stufenlose Getriebe kann vielgestaltig ausgeführt sein, vorzugsweise ist dieses als kraftschlüssiges Zugmittelgetriebe ausgeführt. Dieses umfaßt zwei Scheibenanordnungen, eine erste Scheibenanordnung und eine zweite Scheibenanordnung, wobei die einzelnen Scheiben zur Änderung des Übersetzungsverhältnisses gegeneinander verschiebbar sind. Als Zugmittel finden Riemen, Ketten und Schubgliederbänder Verwendung.

Die Mittel zur Steuerung des Übersetzungsverhältnisses umfassen bei Ausgestaltung des Zugmittelgetriebes mit zwei Scheibenanordnungen, wobei der Abstand der Scheiben einer Scheibenanordnung durch die Anpresskraft der Scheiben einer Scheibenanordnung variierbar ist und diese Größe als direkte Steuergröße oder eine diese wenigstens mittelbar charakterisierende Größe verwendet wird. Stelleinrichtungen zur Beaufschlagung der einzelnen Scheiben bzw. zu deren Verschiebung können beispielsweise elektro-hydraulisch betrieben werden. Dabei kann entweder nur einer Scheibenanordnung eine entsprechende Stelleinrichtung zur aktiven Änderung des Laufradius für das Zugmittel zugeordnet werden, wobei der anderen Scheibenanordnung beispielsweise vorgespannte Federeinrichtungen zugeordnet sind, die entsprechend der Änderung des Abstandes der einzelnen Scheiben und damit des Laufradius an der mittels der Stelleinrichtung aktiv ansteuerbaren Scheibenanordnung eine automatische Anpassung der Anpresskraft und damit der Einstellung des Laufradius ermöglichen. Eine andere Möglichkeit besteht in der Ansteuerung beider Scheibenanordnungen. Bezüglich der konkreten Ausführung bestehen eine Mehrzahl von bereits aus dem Stand der Technik bekannten Möglichkeiten, auf welche daher nicht näher eingegangen werden soll.

### Die Funktionsweise einer Getriebeanordnung gestaltet sich wie folgt:

Bei Stillstand der Getriebeausgangswelle, d. h. des Abtriebes der Gesamtgetriebeeinheit, gestalten sich die Verhältnisse am ersten Überlagerungsgetriebe wie in einem Planetengetriebe mit stillstehender zweiter Welle, d. h. für die besonders vorteilhafte Ausgestaltung wie mit stillstehendem Sonnenrad. Dementsprechend erfolgt eine Leistungsübertragung über das erste Überlagerungsgetriebe und die über ein Übersetzungsgetriebe mit diesem gekoppelte Scheibenanordnung des Zugmittelgetriebes. Dies gilt in Analogie auch für das zweite Überlagerungsgetriebe, dessen erste Welle, d. h. in diesem Fall Steg mit dem Eingang in der Getriebebaueinheit gekoppelt ist. Dies bedeutet, dass in diesem Zustand beide Scheibenanordnungen des stufenlosen Getriebes angetrieben werden. Das erste Überlagerungsgetriebe fungiert somit als Verteilergetriebe, dessen Eingang mit der Getriebeeingangswelle, dessen erster Ausgang mit dem Zugmittelgetriebe und dessen zweiter Ausgang mit der Getriebeausgangswelle gekoppelt ist. Die zweite Überlagerungsgetriebeeinheit fungiert in diesem Zustand ebenfalls als Verteilergetriebe, wobei der Eingang mit der Getriebeeingangswelle und der erste Ausgang mit der Getriebeausgangswelle und der zweite Ausgang mit der zweiten Scheibenanordnung des stufenlosen Getriebes gekoppelt ist. Als Übersetzungsverhältnis zwischen der ersten Scheibenanordnung und der zweiten Scheibenanordnung wird in diesem Funktionszustand beispielsweise ein Verhältnis von 1 zu 2 bis 2,6, insbesondere 1 zu 2,4 gewählt. Dies bedeutet, dass die zweite, mit dem zweiten Überlagerungsgetriebe gekoppelte Scheibenanordnung schneller rotiert als die erste mit dem ersten Überlagerungsgetriebe in Triebverbindung stehende. Das stufenlose Getriebe läuft in diesem Zustand zunächst im Leerlauf. Erst wenn das Übersetzungsverhältnis am stufenlosen Getriebe verändert wird, d. h. von der Übersetzung zwischen erster und zweiter Scheibenanordnung in Richtung einer Übersetzung ins Langsame umgestellt wird, d. h. von 1 zu 2,4 zu 2,4 zu 1 (Wechsel der Scheiben in der Drehzahl) und damit über die erste Scheibenanordnung ein kleineres Moment übertragen wird, erfolgt die Leistungsübertragung dann im wesentlichen über das erste Überlagerungsgetriebe auf das Zugmittelgetriebe, wobei die über den stufenlosen Teil eingespeiste Leistung dem zweiten Überlagerungsgetriebe zugeführt wird. In diesem Fall fungiert das zweite Überlagerungsgetriebe als Summiergetriebe mit zwei Eingängen, die von der ersten und dritten Welle gebildet werden.

Dementsprechend wird aufgrund des Antriebes des Hohlrades und der Rotation des Steges die Getriebeausgangswelle angetrieben. Da diese jedoch auch direkt mit dem ersten Überlagerungsgetriebe gekoppelt ist, wirkt dieses sich wiederum auf den Leistungsanteil, welcher über das stufenlose Getriebe übertragen wird und konkret auf die Drehzahl der dritten Welle, insbesondere am Hohlrad des ersten Überlagerungsgetriebes, aus.

Die Auslegung der beiden Überlagerungsgetriebe erfolgt dazu beispielsweise wie folgt:
1) Beide Hohlräder und Sonnenräder weisen die gleiche Größe auf. Das erste Überlagerungsgetriebe weist beispielsweise drei einzelne, das zweite Überlagerungsgetriebe eine Mehrzahl von jeweils paarweise miteinander kämmenden Planetenrädem (beispielsweise 2 mal 3 Planetenräder) auf, d. h. zwischen Sonnenrad und Hohlrad sind zwei miteinander kämmende Planetenräder vorgesehen, wobei das erste direkt mit dem Sonnenrad und dem zweiten Planetenrad und das zweite Planetenrad direkt mit dem ersten Planetenrad und Hohlrad kämmt. Beide Sonnenräder weisen zur Erzielung des genannten Übersetzungsverhältnisses im angesprochenen Bereich beispielsweise eine 2,4-mal geringere Zähnezahl als das Hohlrad auf. Bei gewünschter Drehung über 0 sogar eine mehr als 2,4-mal geringere Zähnezahl.
2) Wie 1), jedoch weist das erste Überlagerungsgetriebe eine Mehrzahl von jeweils paarweise miteinander kämmenden Planetenrädern auf, während das zweite Überlagerungsgetriebe nur durch eine einfache Planetenradanordnung zwischen Sonnenrad und Hohlrad charakterisiert ist.

Die paarweise miteinander kämmenden Planetenräder sind vorzugsweise identisch ausgelegt, d. h. weisen vorzugsweise eine Übersetzung von 1 zu 1 auf. Andere Übersetzungen sind ebenfalls denkbar.

Die Auslegung der vorgesehenen Übersetzungsstufen zwischen erstem und zweitem Überlagerungsgetriebe und dem stufenlosen Getriebe (CVT) erfolgt entsprechend der maximal zulässigen Drehzahl am CVT.

Für die erfindungsgemäße Lösung wird zusätzlich eine Steuerung vorgesehen, welche das Übersetzungsverhältnis am Zugmittelgetriebe verändert, insbesondere durch Änderung des Abstandes der Scheiben einer Scheibenanordnung zueinander. Diese erfolgt beispielsweise in Abhängigkeit von der Motordrehzahl, der gewünschten Drehzahl an der Getriebeausgangswelle der Gaspedalstellung sowie weiterer Einflußgrößen. Bezüglich der Steuerung bestehen eine Vielzahl von Möglichkeiten, wobei auf herkömmliche zurückgegriffen werden kann.

Zur Drehrichtungsumkehr kann zusätzlich ein Umkehrgetriebe oder eine entsprechende Anordnung vorgesehen werden, die eine Umkehr der Drehrichtung der Getriebeeingangswelle ermöglicht. Ferner ist es jedoch auch möglich, den Spreizungsbereich voll auszunutzen und die Überlagerungsgetriebe über Null zu fahren.

Die erfindungsgemäße Getriebebaueinheit kann ferner eine Anfahreinheit, beispielsweise in Form eines hydrodynamischen Wandlers , einer hydrodynamischen Kupplung oder einer mechanischen Kupplung, beispielsweise in Form einer naßlaufenden Lamellenkupplung zugeordnet werden, um nicht bereits im Anfahrzustand die volle Last auf das stufenlose Getriebe zu übertragen.

Bei bestimmten Auslegungen des Getriebes ist ein Betrieb über Null möglich. Ansonsten wird zur Drehrichtungsumkehr eine Wendeschaltung vorgesehen.

Gemäß der erfindungsgemäßen Ausführungsform kann sich ergebender Schlupf am stufenlosen Getriebe bei hohen Leistungen durch Mittel zur Angleichung der Umlaufgeschwindigkeit am Zugmittel an die Drehzahl der Antriebswelle verhindert werden. Somit kann noch einmal eine Steigerung der Höhe der übertragbaren Leistung erfolgen.

Die Mittel zur Angleichung der Umlaufgeschwindigkeit des Zugmittels an die Drehzahl des Getriebeeingangs umfassen ein, wenigstens mittelbar mit dem Getriebeeingang gekoppeltes und mit dem Zugmittel kraftschlüssig in Wirkverbindung stehendes Übertragungsglied. Das Zugmittel ist am Außenumfang umlaufend mit einer Profilierung versehen die mit einer dazu komplementär ausgeführten Profilierung am Außenumfang des Übertragungsgliedes in Eingriff steht. Eine andere Möglichkeit besteht darin, das Zugmittel als Kette oder aber als Verbund mit einem Riemen und einer Kette auszuführen, wobei dann das Übertragungsglied als Kettenrad ausgebildet ist, d. h., dass die Ausführung fortlaufend durch unveränderte Positionierung des Übertragungsgliedes gegenüber dem Zugmittel erfolgt. Anpassungen des Zugmittels bei Laufradienänderungen bei Verstellung der Scheiben des stufenlosen Getriebes und synchrone Angleichung der Umlaufgeschwindigkeit des Zugmittels an die Drehzahl des Getriebeeinganges werden über gemäß einem ersten Lösungsansatz über eine Spannvorrichtung, insbesondere Spannrolle ausgeglichen. Die Spannrolle ist dabei verschwenkbar gegenüber dem Zugmittel und ortsfest gelagert. Das Übertragungsglied ist dabei wenigstens mittelbar mit dem Getriebeeingang gekoppelt. Dies bedeutet, dass das Übertragungsglied entweder drehfest mit dem Getriebeeingang oder aber über weitere Übertragungselemente mit diesem gekoppelt ist. Zur Gewährleistung einer Rotation des Übertragungsgliedes mit gleichem Drehsinn wie die Laufrichtung des Zugmittels ist dieses entweder direkt drehfest mit der Antriebswelle bzw. dem Getriebeeingang gekoppelt oder über weitere Übertragungselemente beispielsweise Stirnradsatz, wobei die Anzahl der miteinander kämmenden Übertragungselemente dann ungerade ist. Die Übertragungselemente kann man auch verschwenkbar gegenüber dem Zugmittel anordnen. Die dienen dann gleichzeitig als Spannelement zur Angleichung der Umlaufgeschwindigkeit an die Drehzahl am Getriebeeingang. Das Zahnrad verhindert den Schlupf auf dem kleineren Laufradius des Zugmittelgetriebes. Moment wird über großen und kleinen Laufradius übertragen, wodurch eine größere Übertragungsfläche erreicht wird.

Gemäß einem zweiten Lösungsansatz erfolgt zur straffen und schlupffreien Führung des Zugmittels der Ausgleich der sich bei unterschiedlicher Verstellung der beiden Scheibenanordnungen, d. h. nicht gleichmäßiger Verstellung ergebenden Abweichungen der Zugmittelumlauflänge von der theoretisch in diesem Zustand zur sicheren Übertragung von Drehmoment erforderlichen Länge durch Verschwenkbarkeit der Scheibenanordnungen um das Übertragungsglied. Dabei werden die auf den mit den Scheibenanordnungen drehfest verbundenen Wellen und die auf diesen gelagerten Elemente - Ausgang der ersten festen Übersetzungsstufe und Eingang der zweiten festen Übersetzungsstufe - mit verschwenkt. Durch diese ist der Verschwenkradius festgelegt. Die Verschwenkung erfolgt dabei immer in Richtung bzw. um das Übertragungsglied in Umfangrichtung.

Eine weitere Möglichkeit besteht in der Zuordnung entsprechender Federeinrichtungen zu den einzelnen Scheiben der Scheibenanordnungen, wobei die Federeinrichtungen beispielsweise als Druckfedern ausgeführt sind und immer in Richtung kleinster Laufradius wirken.

Die Ausbildung der Getriebebaueinheit mit Planetengetrieben mit im wesentlichen gleicher Dimensionierung der Sonnen- und Hohlräder und vorzugsweise Stimrädern und paarweisen Planetenrädern gleicher Größe und Zähnezahl bietet in Kombination mit den Mitteln zur Angleichung der Umlaufgeschwindigkeit den Vorteil, dass das Übertragungsglied über den gesamten Betriebsbereich mit dem Zugmittel zusammenwirken kann, während bei anderer Auslegung der Planetengetriebe Betriebsbereiche auftreten, bei denen eine synchrone Angleichung der Umlaufgeschwindigkeit an die Drehzahl der Antriebswelle aufgrund der unterschiedlichen Umlaufgeschwindigkeiten am Zugmittel nicht gegeben ist und hier die Mittel zur Angleichung zeitweise deaktiviert sind.

Die Erfindung ist nachfolgend anhand von Figuren erläutert. Darin ist im Einzelnen folgendes dargestellt:
- Figur 1a -1c: verdeutlichen eine erfindungsgemäße Ausgestaltung einer Getriebebaueinheit;
- Figur 2: verdeutlicht eine vorteilhafte Weiterentwicklung gemäß Figur 1a;
- Figur 3: verdeutlicht eine Ansicht A gemäß Figur 2 auf die Scheibenanordnungen;
- Figur 4: verdeutlicht in schematisch stark vereinfachter Darstellung anhand einer Ansicht A gemäß Figur 2 eine alternative Ausführung der Mittel zur Angleichung der Umlaufgeschwindigkeit am Zugmittel zur Drehzahl am Getriebeeingang.

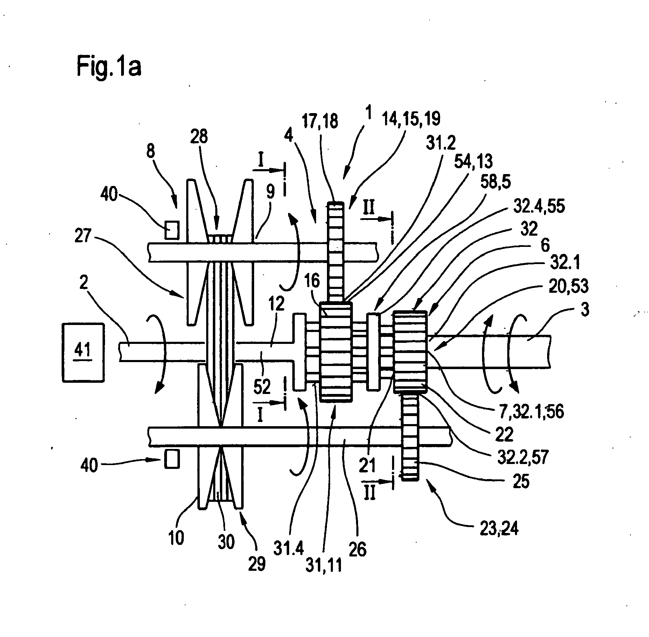

Die Figur 1a verdeutlicht in schematisch vereinfachter Darstellung eine Ausführung einer erfindungsgemäß gestalteten Getriebebaueinheit 1, insbesondere eine Überlagerungsgetriebeeinheit. Diese umfaßt einen Getriebeeingang 2 und einen Getriebeausgang 3. Der Getriebeeingang steht dabei wenigstens mittelbar drehfest mit einer hier im Einzelnen nicht dargestellten Antriebsmaschine in Triebverbindung. Der Ausgang ist wenigstens mittelbar drehfest, d. h. direkt oder indirekt über weitere Übertragungselemente beim Einsatz in Fahrzeugen mit den anzutreibenden Rädern gekoppelt. Das Getriebe arbeitet mit Leistungsverzweigung, umfassend einen ersten Leistungszweig 4 und einen zweiten Leistungszweig 5. Der zweite der beiden Leistungszweige 5 ist dazu drehfest mit dem Getriebeausgang 3 gekoppelt. Erfindungsgemäß ist im ersten Leistungszweig 4 ein stufenloses Getriebe 8 in Form eines kraftschlüssigen Zugmittelgetriebes 27 vorgesehen, wobei der Eingang 9 des stufenlosen Getriebes frei von einer direkten Kopplung mit dem Getriebeeingang 2 und damit der Kopplung mit der Antriebsmaschine ist. Insbesondere ist zwischen dem Getriebeeingang 2 und dem Eingang 9 des stufenlosen Getriebes 8 kein festes Übersetzungsverhältnis vorgesehen. Der Ausgang 10 des stufenlosen Getriebes 8 ist frei von einer direkten Kopplung mit dem Getriebeausgang 3. Zu diesem Zweck ist der Getriebeeingang 2 mit zwei Überlagerungsgetrieben, einem ersten Überlagerungsgetriebe 11 und einem zweiten Überlagerungsgetriebe 6 gekoppelt. Die beiden Überlagerungsgetriebe - erstes Überlagerungsgetriebe 11 und zweites Überlagerungsgetriebe 6 - sind als dreiwellige Planetengetriebe 31 und 32 ausgeführt, die zu einem vierwelligen Planetenradgetriebe 58 zusammengefaßt sind. Jedes Planetengetriebe -das erste Überlagerungsgetriebe 11 bildende Planetengetriebe 31 und das, das zweite Überlagerungsgetriebe 6 bildende Planetengetriebe 32 - umfaßt jeweils eine erste Welle, eine zweite Welle und eine dritte Welle. Für das erste Planetengetriebe 31 ist die erste Welle mit 52, die zweite Welle mit 53 und die dritte Welle mit 54 bezeichnet. Für das zweite Planetengetriebe 32 ist die erste Welle mit 55, die zweite Welle mit 56 und die dritte Welle mit 57 gekennzeichnet. Die Wellen 52 bis 57 werden dabei jeweils von den Elementen der Planetengetriebe 31, 32, insbesondere den Sonnenrädern 31.1 bzw. 32.1 für die Planetengetriebe 31 und 32, den Hohlrädern 31.2 bzw. 32.2 und den Stegen 31.4 und 32.4 gebildet. Dadurch sind bei der dargestellten Ausführung die beiden dreiwelligen Überlagerungsgetriebe 11 und 6 jeweils über ihre Sonnenräder 31.1 und 32.1 und ihre Stege 31.4 und 32.4 miteinander gekoppelt. Die Kopplung zwischen den Sonnenrädern 31.1 und 32.1 ist dabei mit der Getriebeausgangswelle 3 drehfest verbunden, während die Kopplung der Stege 31.4 und 32.4 mit der Getriebeeingangswelle 2 drehfest verbunden ist. Das erste Überlagerungsgetriebe 11 fungiert bei Leistungsübertragung im Traktionsbetrieb über das Zugmittelgetriebe 27 als Verteilergetriebe und umfaßt einen Eingang 12, der drehfest mit dem Getriebeeingang 2 verbunden ist oder diesen bildet und von der ersten Welle 52 gebildet wird und zwei Ausgänge, einen ersten Ausgang 20, der mit der Getriebeausgangswelle 3 drehfest verbunden ist und von der zweiten Welle 53 gebildet wird sowie einen zweiten Ausgang 13, der über eine feste Übersetzung 14 mit dem Eingang 9 des stufenlosen Getriebes 8 gekoppelt ist und von der dritten Welle 54 und damit dem Hohlrad 31.2 gebildet wird. Die feste Übersetzung 14 wird dabei von einer festen Übersetzungsstufe 15 gebildet, wobei der Eingang der festen Übersetzungsstufe vom zweiten Ausgang 13 des Überlagerungsgetriebes 11 gebildet wird und mit 16 bezeichnet ist, während der Ausgang 17 im dargestellten Fall von einem Stirnrad 18 gebildet wird. Die feste Übersetzungsstufe 15 wird im dargestellten Fall somit von einem Stirnradzug 19 gebildet. Das als Zugmittelgetriebe 27 ausgebildete stufenlose Getriebe 8 ist zwischen den beiden Überlagerungsgetrieben 11 und 6, insbesondere den dritten Wellen 54 und 57 angeordnet. Als Eingang des stufenlosen Getriebes 8 wird dabei der mit dem ersten Überlagerungsgetriebe 11 gekoppelte Teil und als Ausgang der mit dem zweiten Überlagerungsgetriebe 6 gekoppelte Teil bezeichnet.

Der von der zweiten Welle 53 in Form des Sonnenrades 31.1 gebildete erste Ausgang 20 des ersten Überlagerungsgetriebes 11 ist drehfest mit dem Getriebeausgang 3 verbunden. Ferner ist die Getriebeeingangswelle 2 mit einem von einer ersten Welle 55 in Form des Steges 32.4 gebildeten Eingang 21 des zweiten Überlagerungsgetriebes 6 verbunden. Die Eingänge und Ausgänge werden dabei jeweils von einem Element der Überlagerungsgetriebe gebildet. Bei Leistungsübertragung am Getriebeausgang 3 ist ein zweiter Ausgang 22 des zweiten Überlagerungsgetriebes 6 mit dem Ausgang 10 des stufenlosen Getriebes 8 über eine feste Übersetzungsstufe 23 gekoppelt, wobei diese im dargestellten Fall von einem Stirnradzug 24 gebildet wird und ein erstes Stirnrad 25 drehfest mit dem in Kraftflussrichtung von erster zur zweiter Scheibenanordnung liegenden Ausgang 10 des stufenlosen Getriebes 8 verbunden ist. Diese drehfeste Kopplung erfolgt durch Anordnung von Ausgang 10 und erstem Stirnrad 25 auf einer gemeinsamen Verbindungswelle 26. Der von der zweiten Welle 56 des zweiten Überlagerungsgetriebes 6 in Form des Sonnenrades 32.1 gebildete Ausgang 7 ist femer mit dem Ausgang 20 des ersten Überlagerungsgetriebes 11 drehfest verbunden, vorzugsweise durch direkte Kopplung.

Bezüglich der Ausführung des stufenlosen Getriebes 8 bestehen eine Vielzahl von Möglichkeiten. Die dargestellte Ausführung beinhaltet ein kraftschlüssiges Zugmittelgetriebe 27, wobei der Eingang 9 von einer ersten Scheibenanordnung 28 und der Ausgang 10 von einer zweiten Scheibenanordnung 29 gebildet wird. Der Abstand der Scheiben ist variabel einstellbar. Die Kopplung der beiden Scheibenanordnungen und die Kraftübertragung erfolgt über ein Zugmittel 30, beispielsweise in Form eines Riemens, einer Kette oder Schubgliederbandes.

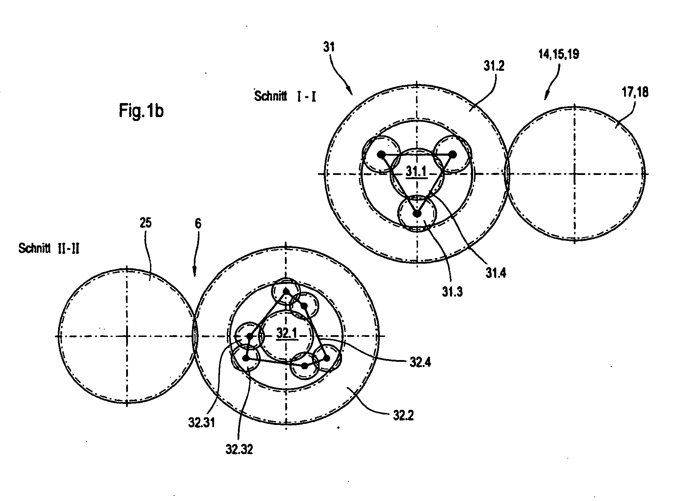

Erstes Überlagerungsgetriebe 11 und das zweite Überlagerungsgetriebe 6 sind, wie bereits beschrieben, als Umlaufrädergetriebe in Form von Planetenradgetrieben 31 bzw. 32 ausgeführt. Diese umfassen jeweils wenigstens, wie in Figur 1b für das Planetengetriebe 31 dargestellt, ein Sonnenrad 31.1, ein Hohlrad 31.2, einen Steg 31.4, der die Planetenräder 31.3 miteinander koppelt. Erfindungsgemäß sind beim zweiten Planetengetriebe 32 das Sonnenrad 32.1 und das Hohlrad mit 32.2 jedoch über paarweise miteinander kämmende Planetenräder 32.31, 32.32 verbunden, wobei die Sonnenräder 32.1 und 31.2 und die Hohlräder 31.2, 32.2 der beiden Planetenradsätze 31, 32 jeweils gleich dimensioniert sind. Die Dimensionierung bezieht sich dabei auf die äußeren Abmessungen, insbesondere Außendurchmesser und Zähnezahl der einzelnen Räder. Erfindungsgemäß sind ferner die beiden Übersetzungsstufen 15 und 23 gleich dimensioniert. Der Eingang des ersten Überlagerungsgetriebes 11, der mit 12 bezeichnet ist, wird dabei vom Steg 31.4 gebildet. Dieser ist direkt mit dem Eingang 21 des zweiten Überlagerungsgetriebes 6, welches zumindest im Funktionszustand der Leistungsübertragung über das stufenlose Getriebe 8 als Summiergetriebe fungiert, gekoppelt bzw. bildet diesen. Auch dieser wird vom Steg 32.4 des zweiten Planetengetriebes 32 gebildet. Dies bedeutet, dass die Stege beider Planetengetriebe miteinander drehfest verbunden sind. Ferner werden die beiden Ausgänge 20 und 7 von erstem Überlagerungsgetriebe 11, d. h. Planetengetriebe 31 und zweitem Überlagerungsgetriebe 6, d. h. Planetengetriebe 32, jeweils vom Sonnenrad 31.1 bzw. 32.1 gebildet, welche drehfest mit dem Getriebeausgang verbunden sind. Das Hohlrad 31.2 des Planetengetriebes 31, d. h. das erste Überlagerungsgetriebe 11 bildet dabei den Eingang 16 der festen Übersetzung, während das Hohlrad 32.2 den Ausgang der festen Übersetzungsstufe 23 bildet.

Die Figur 1a und die Ansichten I-I und II-II gemäß der Figur 1b, verdeutlichen eine besonders vorteilhafte Ausgestaltung der beiden Überlagerungsgetriebe 11 und 6. Bei dieser Ausführung umfasst beispielsweise das erste Überlagerungsgetriebe 11 ein Hohlrad 31.2, ein Sonnenrad 31.1, einen Steg 31.4 und einfache Planetenradanordnungen in Form von jeweils mit Sonnenrad 31.1 und Hohlrad 31.2 kämmenden Planetenrädern 31.3. Zwischen Sonnenrad 31.1 und Hohlrad 31.2 sind eine Mehrzahl einzelner Planetenräder 31.3 vorgesehen, d. h. jedes der Planetenräder 31.3 steht sowohl mit dem Sonnenrad 31.1 als auch dem Hohlrad 31.2 in Eingriff. Das zweite Überlagerungsgetriebe 6 ist als Planetengetriebe 32 mit paarweise miteinander kämmenden und vorzugsweise ebenfalls gleich hinsichtlich Größe, insbesondere Außendurchmesser und Verzahnung, insbesondere Zähnezahl dimensionierten Planetenrädern 32.31 und 32.32 ausgebildet. Beide Hohlräder 31.2 bzw. 32.2 und beide Sonnenräder 31.1 bzw. 32.1 sind erfindungsgemäß hinsichtlich Größe und Zähnezahl gleich dimensioniert, vorzugsweise sind beide durch einen gleichen Teilkreisdurchmesser und gleiche Zähnezahl, d. h. bei den Sonnenrädern am Außenumfang dieser und bei den Hohlrädern 31.2, 32.2 jeweils sowohl am Innenumfang als auch am Außenumfang sowie dem gleichen Modul m charakterisiert. Beide Sonnenräder 31.1 und 32.1 können dabei beispielsweise mit einem im Bereich von einschließlich 2 bis einschließlich 2,6-mal kleineren Durchmesser als der Innenumfang des Hohlrades 31.2 bzw. 32.2 ausgeführt werden und weisen auch eine entsprechend 2 bis 2,6-mal geringere Zähnezahl auf.

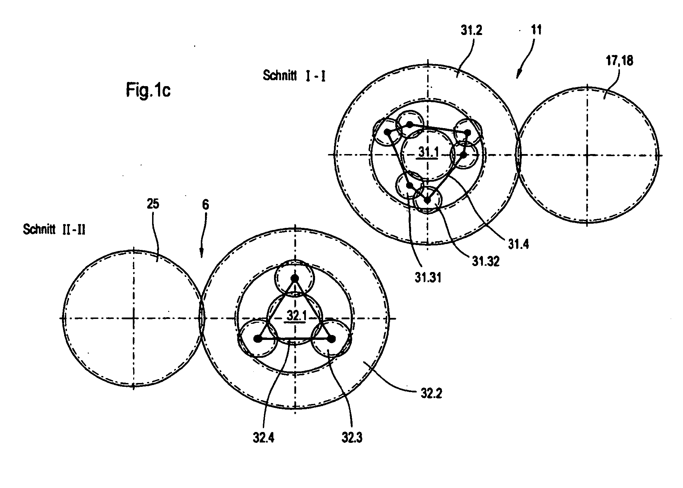

Denkbar ist auch bei entsprechender Dimensionierung der Übersetzungsstufen eine Ausführung des ersten Überlagerungsgetriebes 11 analog zu dem in Figur 1b beschriebenen zweiten Überlagerungsgetriebe 6, d. h. mit paarweise miteinander kämmenden Planetenrädern zwischen Sonnenrad und Hohlrad, während das zweite Überlagerungsgetriebe 6 dann nur einzelne direkt mit Sonnenrad 32.1 und Hohlrad 32.2 kämmende Planetenräder 32.3 aufweist, wie in Figur 1c dargestellt.

Die Betriebsweise gestaltet sich wie folgt: In einem ersten Betriebsbereich ist bei angetriebener Getriebeeingangswelle, d. h. Getriebeeingang 2, die Drehzahl am Getriebeausgang 3 gleich 0. Die Leistung wird somit quasi von der Getriebeeingangswelle über beide Überlagerungsgetriebe auf beide Scheibenanordnungen 28, 29 des stufenlosen Getriebes 8 übertragen. Dieses läuft quasi im Leerlauf. Die Übersetzung an der Scheibenanordnungen 28, 29 ist in diesem Zustand derart gewählt, dass die mit dem ersten Überlagerungsgetriebe 11 gekoppelte Scheibenanordnung 28 langsamer rotiert als die zweite, mit dem zweiten Überlagerungsgetriebe 6 gekoppelte Scheibenanordnung 29, d. h. eine Übersetzung ins Schnelle gewährleisten würde. Dann erfolgt eine Änderung des Übersetzungsverhältnisses am stufenlosen Getriebe 8 in Richtung Übersetzung ins Langsame bei Leistungsübertragung von der ersten zur zweiten Scheibenanordnung 28, 29 betrachtet (Wechsel der Scheiben in der Drehzahl). Die Abtriebswelle, d. h. die Getriebeausgangswelle 3 wird angetrieben. Mit zunehmender Drehzahl am Abtrieb wirkt sich dies auch auf die Drehzahl des Hohlrades 31.2 am ersten Überlagerungsgetriebe 11 und dem Eingang 9 des stufenlosen Getriebes 8 und demzufolge auch im Bereich des Ausganges 10 des stufenlosen Getriebes 8 aus.

Ein wesentlicher Vorteil der erfindungsgemäßen Lösung besteht dabei darin, dass mittels der Überlagerungsgetriebe 11 bzw. 6 und der Möglichkeit der Aktivsteuerung des Zugmittelgetriebes 8, beispielsweise durch Mittel 40, die Belastung des Zugmittelgetriebes gering gehalten werden kann, indem in diesem Fall durch Ansteuerung der Scheibenanordnungen 28 bzw. 29 die Übersetzung am Zugmittelgetriebe 8 aktiv geändert werden kann und damit das Eingangsmoment bei hohen Drehzahlen am Zugmittelgetriebe gering gehalten werden kann. Aufgrund der Ausführung eines der als Planetengetriebe ausgebildeten Überlagerungsgetriebe mit paarweise miteinander kämmenden Planetenrädern, welche auch als doppelläufige Planetengetriebe bezeichnet werden, wird in jedem Betriebszustand garantiert, dass das CVT mit konstanter (Summe beider dritten Wellen) Drehzahl bei maximaler Motordrehzahl arbeitet, wobei auch ein Wechsel bezüglich des Übersetzungsverhältnisses an den einzelnen Scheiben bei maximaler Motordrehzahl stattfinden kann, d. h. ein über Null Drehen möglich ist. Die dritte Welle des ersten Überlagerungsgetriebes und die dritte Welle des zweiten Überlagerungsgetriebes wechseln die Drehzahl, z. B. von 4800 zu 2000 U/min, von 2000 zu 4800 U/min. Ferner ermöglicht diese Ausführung neben den funktionalen Vorteilen auch Vorteile hinsichtlich des erforderlichen Bauraumes, da die einzelnen Überlagerungsgetriebe und Übersetzungsstufen sich in radialer Richtung hinsichtlich des benötigen Bauraumes sich nicht voneinander unterscheiden.

Ferner verdeutlicht die Figur 1a die Möglichkeit der Ausgestaltung der Getriebebaueinheit 1 mit einem Anfahrelement 41, beispielsweise einem hydrodynamischen Drehzahl-/Drehmomentwandler. Andere Anfahrelemente sind denkbar.

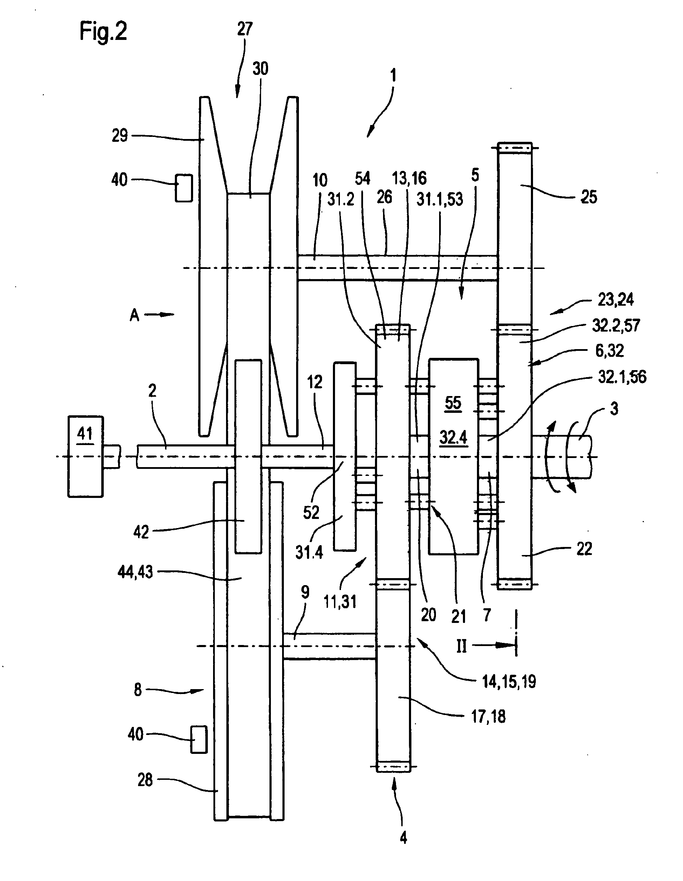

Die in den Figuren 1a bis 1c dargestellten Ausführungen stellen eine hinsichtlich der Ausführung besonders einfach zu gestaltende und kompakte Lösung dar. Die Ansteuerung der stufenlosen Getriebeeinheit erfolgt dabei in Abhängigkeit von der Höhe der Motordrehzahl sowie des gewünschten am Abtrieb abzugebenden Momentes bzw. der Drehzahl. Ferner können als zusätzliche Einflußgrößen auch das Moment am Getriebeausgang 3 herangezogen werden Die Figur 2 verdeutlicht anhand einer Ausführung gemäß Figur 1a, jedoch mit vertauschter Anordnung der Scheibenanordnungen 28, 29 eine besonders vorteilhafte Weiterentwicklung der erfindungsgemäßen Getriebebaueinheit 1 zur Realisierung der Übertragung hoher Momente. Der Grundaufbau entspricht dabei dem in der Figur 1a beschriebenen, weshalb für gleiche Elemente die gleichen Bezugszeichen verwendet werden. Das stufenlose Getriebe 8 ist ebenfalls als kraftschlüssiges Zugmittelgetriebe 27 ausgebildet, wobei der Eingang 9 von einer ersten Scheibenanordnung 28 und der Ausgang 10 von einer zweiten Scheibenanordnung 29 gebildet wird, wobei die Scheiben zueinander und voneinander verschoben werden können, d. h. der Abstand ist variabel. Die Kopplung der beiden Scheibenanordnungen und die Kraftübertragung erfolgt über ein Zugmittel 30, beispielsweise in Form eines Riemens einer Kette oder Schubgliederbandes. Erfindungsgemäß ist das Zugmittel 30 am Außenumfang 43 mit einer Profilierung 44 versehen, die einen Eingriff eines wenigstens mittelbar drehfest mit dem Getriebeeingang 2 gekoppelten Übertragungsgliedes 42 mit entsprechend zur Profilierung 44 komplementär ausgebildeter Profilierung 45 erlaubt und somit eine synchrone Angleichung der Umlaufgeschwindigkeit des Zugmittels 30 an den Getriebeeingang 2 bei jedem beliebigen Übersetzungsverhältnis zwischen Getriebeeingang und Getriebeausgang 2 und 3 ermöglicht. Diese Maßnahme bietet den Vorteil, dass bei gleicher Dimensionierung des Zugmittelgetriebes 27 das Mehrfache an Leistung, beispielsweise ca. 3-mal mehr Leistung als ohne diese Maßnahme übertragen werden kann. Schlupfzustände am Zugmittelgetriebe 27 werden vermieden. Als Übertragungsglied 42 finden entsprechend der Auswahl des Zugmittels 30 Zahnoder Kettenräder Verwendung. Die Trumlängeänderungen werden über eine, hier nicht dargestellte Spannvorrichtung ausgeglichen, beispielsweise eine Spannrolle 47. Das Zahnrad verhindert den Schlupf auf dem kleinen Laufradius des CVT. Beide Scheibenanordnungen übertragen Momente (großer und kleiner Laufradius).

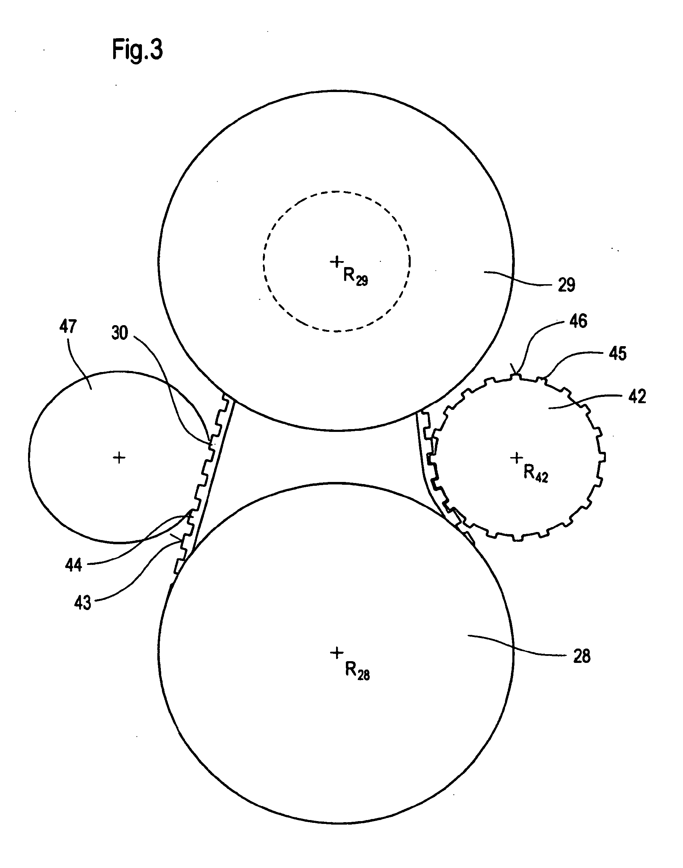

Die Figur 3 verdeutlicht in schematisch stark vereinfachter Darstellung eine Ansicht A gemäß Figur 2 auf das Zugmittelgetriebe 30, welches in einer Ebene parallel zur Antriebswelle 2 angeordnet ist. Daraus wird ersichtlich, dass das Zugmittel 30 am Außenumfang 43 beispielsweise Profilierungen 44 aufweist. Diese kann in das Zugmittel 30 eingearbeitet oder aber durch entsprechende Ausgestaltung, beispielsweise der Ausbildung des Zugmittels 30 aus mehreren Schichten gebildet werden. Vorzugsweise ist das Zugmittel 30 als Zahnriemen ausgeführt. Das Übertragungsglied 42 ist als Zahnrad ausgebildet und weist an seinem Außenumfang 46 eine entsprechend komplementäre Profilierung 45 auf, welches ermöglicht, mit dem Zugmittel 30 in Eingriff zu stehen und kraftschlüssig mit diesem zusammenzuwirken. Denkbar ist jedoch auch eine Ausbildung als Kette. In diesem Fall ist das Übertragungsglied 42 dann als Kettenrad ausgeführt.

Das Übertragungsglied 42 ist vorzugsweise drehfest mit dem als Antriebswelle fungierenden Getriebeeingang 2 verbunden und ermöglicht in Verbindung mit einer Spannvorrichtung somit eine synchrone Angleichung der Umlaufgeschwindigkeit des Zugmittels 30 an die Drehzahl der Antriebsmaschine-bzw. den Getriebeeingang 2. Ein Rutschen des Zugmittels wird dadurch vermieden. Denkbar sind jedoch auch Ausführungen der Mittel zur Kopplung der Umlaufgeschwindigkeit an die Drehzahl der Antriebswelle mit einer Mehrzahl von miteinander in Eingriff stehenden Übertragungselementen, wobei eine ungerade Anzahl zu wählen ist, um die Gleichheit des Drehsinns zwischen Getriebeeingang 2 und Laufrichtung des Zugmittels 30 zu gewährleisten. Der Eingriff erfolgt dabei immer fortlaufend. Die Übertragungselemente kann man auch verschwenkbar anlegen. Sie dienen dann gleichzeitig als Spannelement zur Angleichung der Umlaufgeschwindigkeit des Zugmittels an den Getriebegang.

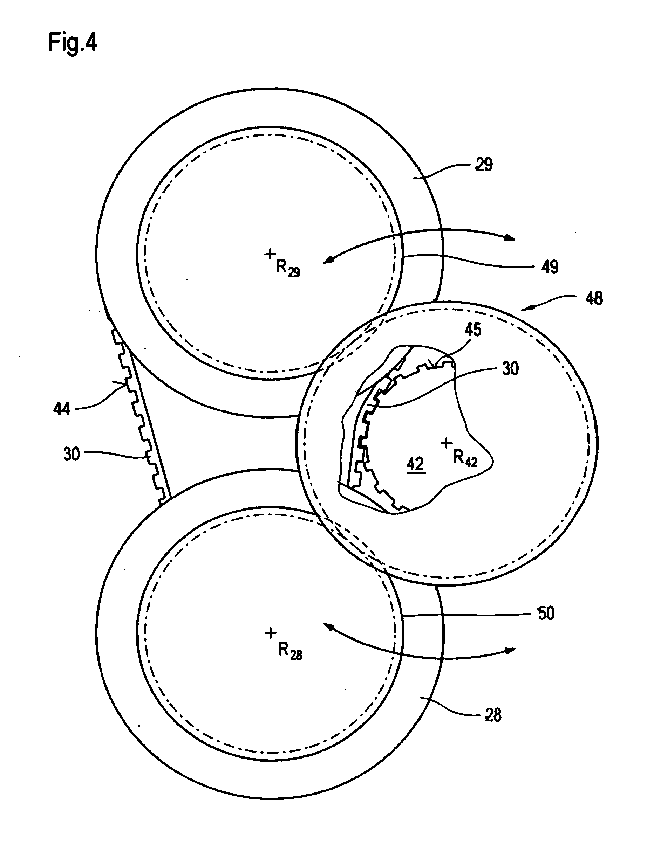

Die Figur 4 verdeutlicht in einer Ansicht A gemäß Figur 2 eine weitere Ausführungsmöglichkeit zur Realisierung der Spannung am Zugmittel 30 und Angleichung der Umlaufgeschwindigkeit des Zugmittels 30 an die Drehzahl des Übertragungsgliedes 42. Das Zugmittel 30 ist ebenfalls mit einer, hier im einzelnen nicht dargestellten Profilierung 44 versehen, welche mit einer dazu komplementären Profilierung 45 an Übertragungsglied 42 im Eingriff steht. Das Übertragungsglied 42 ist drehfest mit der Antriebswelle bzw. dem Getriebeeingang 2 verbunden und ermöglicht die synchrone Angleichung der Umlaufgeschwindigkeit des Zugmittels 30 an die Drehzahl der Antriebswelle bzw. des Getriebeeingangs 2. Zur Realisierung der zur Leistungsübertragung erforderlichen Spannung am Zugmittel 30 bei Verstellung mindestens einer der Scheibenanordnungen 29 und 28 oder beider werden diese in Umlaufrichtung verschwenkt. Die Verschwenkung erfolgt bezogen auf die Rotationsachse R₄₂ des Übertragungsgliedes 42 auf einem Radius, der durch den Abstand zwischen Rotationsachse R₄₂ und der Rotationsachsen R₂₈, R₂₉ der einzelnen Scheibenanordnungen 28, 29 bestimmt wird. Zur Realisierung ist beispielsweise ein Verschwenkgetriebe 48 vorgesehen, welches als Stirnradstufe aufgebaut ist und zwei koaxial zu den Scheibenanordnungen 28 und 29 angeordnete Stirnräder 49 und 50 umfaßt, die mit einem koaxial zum Übertragungsglied 42 angeordneten Stirnrad 51 kämmen. Das Stirnrad 51 ist hinsichtlich seiner Rotationsachse ortsfest gelagert. Die Verstellung bzw. das Verschwenken erfolgt dabei vorzugsweise synchron Versatz zur Verstellung der Abstände an den einzelnen Scheibenanordnungen 28, 29. Dadurch werden die Abstände zwischen dem Rotationsachsen R₂₈, R₂₉ radialer Richtung geändert.

### Bezugszeichenliste

- 1: Getriebebaueinheit
- 2: Getriebeeingang
- 3: Getriebeausgang
- 4: erster Leistungszweig
- 5: zweiter Leistungszweig
- 6: zweites Überlagerungsgetriebe
- 7: Ausgang des zweiten Überlagerungsgetriebe
- 8: stufenloses Getriebe
- 9: Eingang des stufenlosen Getriebes
- 10: Ausgang des stufenlosen Getriebes
- 11: erstes Überlagerungsgetriebe
- 12: Eingang des ersten Überlagerungsgetriebes
- 13: erster Ausgang des ersten Überlagerungsgetriebes
- 14: feste Übersetzung
- 15: feste Übersetzungsstufe
- 16: Eingang der festen Übersetzungsstufe
- 17: Ausgang der festen Übersetzungsstufe
- 18: Stirnrad
- 19: Stirnradzug
- 20: zweiter Ausgang
- 21: Eingang des zweiten Überlagerungsgetriebes
- 22: zweiter Eingang des zweiten Überlagerungsgetriebes
- 23: feste Übersetzungsstufe
- 24: Stirnradzug
- 25: erstes Stirnrad
- 26: Verbindungswelle
- 27: kraftschlüssiges Zugmittelgetriebe
- 28: Scheibenanordnung
- 29: Scheibenanordnung
- 30: Zugmittel
- 31: Planetengetriebe
- 32: Planetengetriebe
- 31.1, 32.1: Sonnenrad
- 31.2, 32.2: Hohlrad
- 31.3, 32.3, 31.31, 31.32: Planetenräder
- 31.4,32.4: Steg
- 40: Mittel zur Beeinflussung des Übersetzungsverhältnisses am stufenlosen Getriebe
- 41: Anfahrelement
- 42: Übertragungsglied
- 43: Außenumfang
- 44: Profilierung
- 45: Profilierung
- 46: Außenumfang
- 47: Spannvorrichtung
- 48: Verstellgetriebe
- 49: Stirnrad
- 50: Stirnrad
- 51: Planetengetriebe
- 52: erste Welle des ersten Überlagerungsgetriebes 11
- 53: zweite Welle des ersten Überlagerungsgetriebes 11
- 54: dritte Welle des ersten Überlagerungsgetriebes 11
- 55: erste Welle des zweiten Überlagerungsgetriebes 6
- 56: zweite Welle des zweiten Überlagerungsgetriebes 6
- 57: dritte Welle des zweiten Überlagerungsgetriebes 6
- 58: vierwelliges Planetenradgetriebe

## Patentansprüche

1. Getriebebaueinheit (1), insbesondere Überlagerungsgetriebeeinheit
1.1 mit einem Getriebeeingang (2) und einem Getriebeausgang (3);
1.2 mit zwei als dreiwellige Planetengetriebe (31, 32), umfassend jeweils ein Sonnenrad (31.1, 32.1), ein Hohlrad (31.2, 32.2), einen Steg (31.4, 32.4) und Planetenräder (31.3, 32.3) ausgeführten Überlagerungsgetrieben, wobei die einzelnen Wellen jeweils von den Sonnenrädern (31.1, 32.1), Hohlrädern (31.2, 32.2) und Stegen (31.4, 32.4) oder den mit diesen drehfest verbundenen Elementen gebildet werden, ausgeführten Übertagerungsgetrieben (11, 6)-einem ersten Überlagerungsgetriebe (11) und einem zweiten Überlagerungsgetriebe (6), die miteinander zu einem vierwelligen Planetengetriebe (58) gekoppelt sind;
1.3 eine erste Welle (52) des ersten Überlagerungsgetriebes (11) und eine erste Welle (55) des zweiten Überlagerungsgetriebes (6) sind drehfest mit dem Getriebeeingang (2) verbunden;
1.4 eine zweite Welle (53) des ersten Überlagerungsgetriebes (11) und eine zweite Welle (56) des zweiten Überlagerungsgetriebes (6) sind mit dem Getriebeausgang (3) drehfest verbunden;
**gekennzeichnet durch** die vorliegenden Merkmale:
1.5 zwischen den dritten Wellen (54, 57) von erstem und zweitem Überlagerungsgetriebe (11, 6) ist ein stufenloses Getriebe (8) in Form eines Zugmittelgetriebes (27) angeordnet;
1.6 mit Mitteln (40) zur Steuerung des Übersetzungsverhältnisses am Zugmittelgetriebe (27);
1.7 eines der beiden Übertagerungsgetriebe - erstes Übertagerungsgetriebe (11) oder zweites Überlagerungsgeteiebe (6) - umfasst jeweils paarweise miteinander kämmende Planetenräder (31.31, 32.32; 32.31, 32.32), wobei ein erstes der paarweise miteinander kämmenden Planetenräder (32.32, 31.32) jeweils direkt mit dem Hohlrad (32.2,31.2) und dem zweiten Planetenrad (32.31, 31.31) kämmt, während das jeweils andere Planetenrad (32.31, 32.31) mit dem ersten Planetenrad (32.32, 31.32) und dem Sonnenrad (32.1, 31.1) in Eingriff steht,
1.8 das andere der beiden Überlagerungsgetriebe weist einzelne Planetenräder (31.3, 32.3) zwischen Sonnenrad und Hohlrad auf;
1.9. es sind Mittel zur Angleichung der Umlaufgeschwindigkeit des Zugmittels (30) an die Drehzahl des Getriebeeingangs (2) vorgesehen;
1.10. die Mittel zur Angleichung der Umlaufgeschwindigkeit des Zugmittels (30) an die Drehzahl des Getriebeeingangs (2) umfassen ein, wenigstens mittelbar mit dem Getriebeeingang (2) gekoppeltes und mit dem Zugmittel (30) kraftschlüssig in Wirkverbindung bringbares Übertragungsglied (42).

2. Getriebebaueinheit (1) nach Anspruch 1, **dadurch gekennzeichnet, dass** Sonnenräder (31.1, 32.1) und die Hohlräder (31.2, 32.2) beider Übertagerungsgetriebe (11, 6) gleich dimensioniert sind.

3. Getriebebaueinheit (1) nach Anspruch 2, **dadurch gekennzeichnet, dass** Sonnenräder (31.1, 32.1) und die Hohlräder (31.2, 32.2) beider Überlagerungsgetriebe (11, 6) jeweils hinsichtlich ihrer äußeren Abmessungen in radialer Richtung und der Verzahnung gleich dimensioniert sind.

4. Getriebebaueinheit (1) nach Anspruch 3, **gekennzeichnet durch** die folgenden Merkmale:
4.1 die Sonnenräder (31.1, 32.1) beider Überlagerungsgetriebe (11, 6) sind durch einen gleichen Teilkreisdurchmesser und gleiche Zähnezahl oder gleicher Modul charakterisiert;
4.2 die Hohlräder (31.2, 32.2) beider Überlagerungsgetriebe (11, 6) sind am Außen- und Innenumfang jeweils **durch** einen gleichen Teilkreisdurchmesser und gleiche Zähnezahl oder gleicher Modul charakterisiert.

5. Getriebebaueinheit (1) nach einem der Ansprüche 1 bis 4, **gekennzeichnet durch** die folgenden Merkmale:
5.1 die erste Weile (52) des ersten Überlagerungsgetriebes (11) und die erstelle (55) des zweiten Überlagerungsgetriebes (6) werden jeweils vom Steg (31.4, 32.4) oder einem drehfest mit diesem gekoppelten Element der einzelnen Planetengetriebe (31, 32) gebildet;
5.2 die zweite Welle (53) des ersten Überfagerungsgetriebes (11) und die zweite Welle (56) des zweiten Oberlagerungsgetriebes (6) werden jeweils von den Sonnenrädern (31.1, 32.1) der Planetengetriebe (31, 32) gebildet;
5.3 die dritten Wellen (54, 57) von erstem und zweitem Überlagerungsgetriebe (11, 6) werden von den Hohlrädern (31.2, 32.2) der Planetengetriebe (31, 32) gebildet.

6. Getriebebaueinheit (1) nach einem der Ansprüche 1 bis 5, **gekennzeichnet durch** das folgende Merkmal:
6.1 die dritte Welle (54) des ersten Überlagerungsgetriebes (11) ist über eine Übersetzungsstufe (15) mit dem stufenlosen Getriebe (8) gekoppelt.

7. Getriebebaueinheit (1) nach einem der Ansprüche 1 bis 6, **gekennzeichnet durch** das folgende Merkmal:
7.1 die dritte Welle (57) des zweiten Überlagerungsgetriebes (6) ist über eine Übersetzungsstufe (23) mit dem stufenlosen Getriebe (8) gekoppelt.

8. Getriebebaueinheit (1) nach einem der Ansprüche 6 oder 7, **dadurch gekennzeichnet, dass** die festen Übersetzungsstufen (15, 23) von Stirnradstufen (19, 24) gebildet werden.

9. Getriebebaueinheit (1) nach Anspruch 8, **gekennzeichnet durch** die folgenden Merkmale:
9.1 die erste feste Übersetzungsstufe (15) wird von der dritten Welle (54) des ersten Überlagerungsgetriebes (11) und einem drehfest mit dem Eingang (9) des stufenlosen Getriebes (8) gekoppelten Stirnrad (18) gebildet;
9.2 die zweite Übersetzungsstufe (23) wird von einem mit dem Ausgang (10) des stufenlosen Getriebes (8) drehfest gekoppelten Stirnrad (25) und der dritten Welle (57) des zweiten Überlagerungsgetriebes (6) gebildet.

10. Getriebebaueinheit (1) nach einem der Ansprüche 7 bis 9, **dadurch gekennzeichnet, dass** die beiden festen Übersetzungsstufen (15, 23) gleich dimensioniert sind.

11. Getriebebaueinheit (1) nach einem der Ansprüche 1 bis 10, **dadurch gekennzeichnet, das** das erste Überlagerungsgetriebe (11) und das zweite Übetiagerungsgetriebe (6) hinsichtlich ihrer Dimensionierung derart ausgelegt sind, dass zwischen der dritten Welle (54) des ersten Überlagerungsgetriebes (11) und der dritten Welle (57) des zweiten Überlagerungsgetriebes (6) eine Übersetzung von 1 zu 2 bis 3, vorzugsweise 1 zu 2,4 einstellbar ist.

12. Getriebebaueinheit (1) nach einem der Ansprüche 1 bis 11, **dadurch gekennzeichnet, dass** das stufenlose Getriebe (8) ein kraftschlüssiges Zugmittelgetriebe (27) ist und als Zugmittel (30) ein Schubgliederband oder ein Riemen oder eine Kette eingesetzt wird.

13. Getriebebaueinheit (1) nach einem der Ansprüche 1 bis 12, **dadurch gekennzeichnet, dass** das Zugmittel (30) am Außenumfang (43) umlaufend mit einer Profilierung (44) ausgebildet ist, die mit einer dazu komplementär ausgeführten Profilierung (45) am Außenumfang (46) des Übertragungsgliedes (42) in Eingriff bringbar ist.

14. Getriebebaueinheit (1) nach Anspruch 13, **dadurch gekennzeichnet, dass** das Übertragungsglied (42) koaxial zu und drehfest mit Getriebeeingangswelle (2) oder parallel zu dieser angeordnet ist und zur Aufrechterhaltung der Spannung am Zugmittel (30) ein Verschwenkgetriebe (48) zur Verschwenkung der Scheibenanordnungen (28, 29) um das Übertragungsglied (42) vorgesehen ist.

15. Getriebebaueinheit (1) nach Anspruch 13, **dadurch gekennzeichnet, dass** das Übertragungsglied koaxial zu und drehfest mit Getriebeeingangswelle (2) oder parallel zu dieser angeordnet ist und dem Zugmittel (30) zur Aufrechterhaltung der Spannung eine verschiebbar oder verschwenkbar gelagerte Spannvorrichtung (47) zugeordnet ist.

16. Getriebebaueinheit (1) nach einem der Ansprüche 1 bis 15, **dadurch gekennzeichnet, dass** die Mittel (40) zur Steuerung des Übersetzungsverhältnisses am Zugmittelgetriebe (27) Stellglieder zum Verstellen der Abstände der einzelnen Scheibenanordnungen (28, 29) umfassen.

17. Getriebebaueinheit (1) nach einem der Ansprüche 1 bis 16, **dadurch gekennzeichnet, dass** zusätzlich Mittel zur Realisierung der Drehrichtungsumkehr vorgesehen sind.

18. Getriebebaueinheit (1) nach Anspruch 17, **dadurch gekennzeichnet, dass** die Mittel einen Wendeschaltsatz umfassen.

19. Getriebebaueinheit (1) nach einem der Ansprüche 1 bis 18, **dadurch gekennzeichnet, dass** dem Getriebeeingang (2) ein Anfahrelement vorgeschaltet ist.

20. Getriebeanordnung nach. Anspruch 19, **dadurch gekennzeichnet, dass** das Anfahrelement als hydrodynamischer Drehzahl-/Drehmomentwandter oder hydrodynamische Kupplung ausgeführt ist.

21. Getriebeanordnung nach Anspruch 20, **dadurch gekennzeichnet, dass** dem Anfahrelement eine Überbrückungskupplung zugeordnet ist.

22. Getriebeanordnung nach Anspruch 19, **dadurch gekennzeichnet, dass** das Anfahrelement als Lamellenkupplung ausgeführt ist.

23. Getriebeanordnung nach Anspruch 19, **dadurch gekennzeichnet, dass** das Anfahrelement als mechanische Kupplung ausgeführt ist.

## Claims

1. A transmission module (1), especially a superposition gear unit;
1.1. with a transmission input (2) and a transmission output (3);
1.2. with two superposition gears (11, 6) arranged as a triple-shaft planetary gear (31, 32), each comprising a sun gear (31.1, 32.1), a ring gear (31.2, 32.2), a planet carrier (31.4, 32.4) and planet gears (31.3, 32.3), with the individual shafts each being formed by the sun gears (31.1, 32.1), ring gears (31.2, 32.2) and planet carriers (31.4, 32.4) or the elements which are torsionally rigidly connected with the same, a first superposition gear (11) and a second superposition gear (6) which are coupled with each other into a four-shaft planetary gear (58);
1.3. a first shaft (52) of the first superposition gear (11) and a first shaft (55) of the second superposition gear (6) are connected in a torsionally rigid manner with the transmission input (2);
1.4. a second shaft (53) of the first superposition gear (11) and a second shaft (56) of the second superposition gear (6) are connected with the transmission output (3) in a torsionally rigid manner;
**characterized by** the following features:
1.5. an infinitely variable drive (8) in the form of a traction drive (27) is arranged between the third shafts (54, 57) of the first and second superposition gear (11, 6);
1.6. with means (40) for controlling the gearing ratio on the traction drive (27);
1.7. one of the two superposition gears, either the first superposition gear (11) or the second superposition gear (6), each comprises planet gears (31.31, 32.32, 32.31, 32.32) combing with each other in pairs, with a first of the planet gears (32.32, 31.32) which comb with each other in pairs each combing directly with the ring gear (32.2, 31.2) and the second planet gear (32.31, 31.31), whereas the respective other planet gear (32.31, 32.31) is in engagement with the first planet gear (32.32, 31.32) and the sun gear (32.1, 31.1);
1.8. the other of the two superposition gears comprises individual planet gears (31.3, 32.3) between sun gear and ring gear;
1.9. means are provided for adjusting the rotational speed of the traction means (30) to the speed of the transmission input (2);
1.10. the means for adjusting the rotational speed of the traction means (30) to the transmission input (2) comprise a transmission member (42) which is coupled at least indirectly with the transmission input (2) and can be brought into operative connection in a non-positive manner with the traction means (30).

2. A transmission module (1) according to claim 1, **characterized in that** the sun gears (31.1, 32.1) and the ring gears (31.2, 32.2) of both superposition gears (11, 6) are dimensioned the same.

3. A transmission module (1) according to claim 2, **characterized in that** the sun gears (31.1, 32.1) and the ring gears (31.2, 32.2) of both superposition gears (11, 6) are dimensioned the same with respect to their outer dimensions in the radial direction and their gearing.

4. A transmission module (1) according to claim 3, **characterized by** the following features:
4.1. the sun gears (31.1, 32.1) of both superposition gears (11, 6) are **characterized by** the same pitch circle diameter and the same number of teeth or the same module;
4.2. the ring gears (31.2, 32.2) of both superposition gears (11, 6) are each **characterized** on the outside and inside diameter by the same pitch circle diameter and the same number of teeth or module;

5. A transmission module (1) according to one of the claims 1 to 4, **characterized by** the following features:
5.1. the first shaft (52) of the first superposition gear (11) and the first shaft (55) of the second superposition gear (6) are each formed by the planet carrier (31.4, 32.4) or an element of the individual planetary gears (31, 32) which are coupled in a torsionally rigid manner with the same;
5.2. the second shaft (53) of the first superposition gear (11) and the second shaft (56) of the second superposition gear (6) are each formed by the sun gears (31.1, 32.1) of the planetary gears (31, 32);
5.3. the third shafts (54, 57) of first and second superposition gear (11, 6) are formed by the ring gears (31.2, 32.2) of the planetary gears (31, 32).

6. A transmission module (1) according to one of the claims 1 to 5, **characterized by** the following feature:
6.1. the third shaft (54) of the first superposition gear (11) is coupled via a speed step (15) with the infinitely variable transmission (8).

7. A transmission module (1) according to one of the claims 1 to 6, **characterized by** the following feature:
7.1. the third shaft (57) of the second superposition gear (6) is coupled via a speed step (23) with the infinitely variable transmission (8).

8. A transmission module (1) according to one of the claims 6 or 7, **characterized in that** the fixed speed steps (15, 23) are formed by spur pinion steps (19, 24).

9. A transmission module (1) according to claim 8, **characterized by** the following features:
9.1. the first fixed speed step (15) is formed by the third shaft (54) of the first superposition gear (11) and a spur pinion (18) coupled in a torsionally rigid manner with the input (9) of the infinitely variable transmission (8);
9.2. the second speed step (23) is formed by a spur pinion (25) coupled in a torsionally rigid manner with the output (10) of the infinitely variable transmission (8) and the third shaft (57) of the second superposition gear (6).

10. A transmission module (1) according to one of the claims 7 to 9, **characterized in that** the two fixed speed steps (15, 23) are dimensioned the same.

11. A transmission module (1) according to one of the claims 1 to 10, **characterized in that** the first superposition gear (11) and the second superposition gear (6) are configured with respect to their dimensioning in such a way that a gear ratio of 1:2 to 3, preferably 1 to 2.4, is adjustable between the third shaft (54) of the first superposition gear (11) and the third shaft (57) of the second superposition gear (6).

12. A transmission module (1) according to one of the claims 1 to 11, **characterized in that** the infinitely variable transmission (8) is a non-positive traction drive (27) and a steel thrust belt or a belt or a chain is used as a traction means (30).

13. A transmission module (1) according to one of the claims 1 to 12, **characterized in that** the traction means (30) is provided on its outside circumference (43) with a profiling (44) all around which can be brought into engagement with a complementary arranged profiling (45) on the outside circumference (46) of the transmission member (42).

14. A transmission module (1) according to claim 13, **characterized in that** the transmission member (42) is arranged coaxially to and torsionally rigidly with the transmission input shaft (2) or parallel to the same, and that for maintaining the tension on the traction means (30) a swivel gear (48) is provided for swiveling the disk arrangements (28, 29) about the transmission member (42).

15. A transmission module (1) according to claim 13, **characterized in that** the transmission member is arranged coaxially to and torsionally rigidly with the transmission input shaft (2) or parallel to the same, and that for maintaining the tension the traction means (30) is associated with a tensioning apparatus (47) which is held in a displaceable or swivelable manner.

16. A transmission module (1) according to one of the claims 1 to 15, **characterized in that** the means (40) for controlling the gear ratio on the traction drive (27) comprise actuators for adjusting the distances of the individual disk arrangements (28, 29).

17. A transmission module (1) according to one of the claims 1 to 16, **characterized in that** means for realizing the reversal of the direction of rotation are additionally provided.

18. A transmission module (1) according to claim 17, **characterized in that** the means comprise a set of reversers.

19. A transmission module (1) according to one of the claims 1 to 18, **characterized in that** a starting element is connected upstream of the transmission input (2).

20. A transmission arrangement according to claim 19, **characterized in that** the starting element is arranged as a hydrodynamic speed-torque converter or a hydrodynamic coupling.

21. A transmission arrangement according to claim 20, **characterized in that** the starting element is associated with a lock-up clutch.

22. A transmission arrangement according to claim 19, **characterized in that** the starting element is arranged as a multi-disk clutch.

23. A transmission arrangement according to claim 19, **characterized in that** the starting element is arranged as a mechanical clutch.

## Revendications

1. Unité de boîte de vitesses (1), en particulier unité de boîte de vitesses à superposition
1.1 avec une entrée d'engrenage (2) et une sortie d'engrenage (3);
1.2 avec deux engrenages à superposition (11, 6) réalisés comme des trains planétaires à trois arbres (31, 32), comprenant chacun une roue solaire (31.1, 32.1), une couronne de train planétaire (31.2, 32.2), une entretoise (31.4, 32.4) et des roues planétaires (31.3, 32.3), les différents arbres étant formés chacun par les roues solaires (31.1, 32.1), les couronnes de train planétaire (31.2, 32.2) et les entretoises (31.4, 32.4) ou par les éléments reliés de manière solidaire en rotation à celles-ci : un premier engrenage à superposition (11) et un deuxième engrenage à superposition (6), couplés ensemble pour former un train planétaire à quatre arbres (58) ;
1.3 un premier arbre (52) du premier engrenage à superposition (11) et un premier arbre (55) du deuxième engrenage à superposition (6) sont reliés de manière solidaire en rotation à l'entrée d'engrenage (2) ;
1.4 un deuxième arbre (53) du premier engrenage à superposition (11) et un deuxième arbre (56) du deuxième engrenage à superposition (6) sont reliés de manière solidaire en rotation à la sortie d'engrenage (3) ;
**caractérisée en ce que** :
1.5 il est prévu entre les troisièmes arbres (54, 57) du premier et du deuxième engrenages à superposition (11, 6) une transmission à réglage continu (8) prenant la forme d'une transmission à moyen de traction (27) ;
1.6 des moyens (40) sont prévus pour contrôler le rapport de multiplication de la transmission à moyen de traction (27) ;
1.7 l'un des deux engrenages à superposition, le premier engrenage à superposition (11) ou le deuxième engrenage à superposition (6), comprend des roues planétaires (31.31, 32.32 ; 32.31, 32.32) engrenant par paires, une première paire de roues planétaires (32.32, 31.32) engrenant par paires engrenant directement avec la couronne de train planétaire (32.2, 31.2) et la deuxième roue planétaire (32.31, 31.31) tandis que l'autre roue planétaire (32.31, 32.31) est en prise avec la première roue planétaire (32.32, 31.32) et la roue solaire (32.1, 31.1),
1.8 l'autre des deux engrenages à superposition possède des roues planétaires (31.3, 32.3) isolées entre la roue solaire et la couronne de train planétaire ;
1.9 des moyens sont prévus pour adapter la vitesse de circulation du moyen de traction (30) à la vitesse de rotation de l'entrée d'engrenage (2) ;
1.10 les moyens pour adapter la vitesse de circulation du moyen de traction (30) à la vitesse de rotation de l'entrée d'engrenage (2) comprennent un organe de transmission (42) couplé au moins indirectement à l'entrée d'engrenage (2) et pouvant être amené en engagement actif par friction avec le moyen de traction (30).

2. Unité de boîte de vitesses (1) selon la revendication 1, **caractérisée en ce que** les roues solaires (31.1, 32.1) et les couronnes de train planétaire (31.2, 32.2) des deux engrenages à superposition (11, 6) sont de mêmes dimensions.

3. Unité de boîte de vitesses (1) selon la revendication 2, **caractérisée en ce que** les roues solaires (31.1, 32.1) et les couronnes de train planétaire (31.2, 32.2) des deux engrenages à superposition (11, 6) ont les mêmes dimensions en ce qui concerne leurs dimensions extérieures dans le sens radial et leur denture.

4. Unité de boîte de vitesses (1) selon la revendication 3, **caractérisée en ce que** :
4.1 1 les roues solaires (31.1, 32.1) des deux engrenages à superposition (11, 6) sont **caractérisées par** un même diamètre de cercle partiel et un même nombre de dents ou un même module ;
4.2 les couronnes de train planétaire (31.2, 32.2) des deux engrenages à superposition (11, 6) sont caractérisées sur leur circonférence extérieure et intérieure par un même diamètre de cercle partiel et un même nombre de dents ou un même module.

5. Unité de boîte de vitesses (1) selon l'une des revendications 1 à 4, **caractérisée en ce que**
5.1 le premier arbre (52) du premier engrenage à superposition (11) et le premier arbre (55) du deuxième engrenage à superposition (6) sont formés chacun par l'entretoise (31.4, 32.4) ou par un élément du premier train planétaire isolé (31, 32) couplé à celle-ci ;
5.2 le deuxième arbre (53) du premier engrenage à superposition (11) et le deuxième arbre (56) du deuxième engrenage à superposition (6) sont formés chacun par les roues solaires (31.1, 32.1) des engrenages à train planétaire (31, 32) ;
5.3 les troisièmes arbres (54, 57) des premier et deuxième engrenages à superposition (11, 6) sont formés par les couronnes de train planétaire (31.2, 32.2) des engrenages à train planétaire (31, 32).

6. Unité de boîte de vitesses (1) selon l'une des revendications 1 à 5, **caractérisée en ce que**
6.1 1 le troisième arbre (54) du premier engrenage à superposition (11) est couplé par un étage multiplicateur (15) à la transmission à réglage continu (8).

7. Unité de boîte de vitesses (1) selon l'une des revendications 1 à 6, **caractérisée en ce que**
7.1 1 le troisième arbre (57) du deuxième engrenage à superposition (6) est couplé par un étage multiplicateur (23) à la transmission à réglage continu (8).

8. Unité de boîte de vitesses (1) selon l'une des revendications 6 ou 7, **caractérisée en ce que** les étages multiplicateurs fixes (15, 23) sont formés par des étages de roues_droites (19, 24).

9. Unité de boîte de vitesses (1) selon la revendication 8, **caractérisée en ce que**
9.1 le premier étage multiplicateur fixe (15) est formé par le troisième arbre (54) du premier engrenage à superposition (11) et une roue droite (18) couplée de façon solidaire en rotation à l'entrée (9) de la transmission à réglage continu (8) ;
9.2 le deuxième étage multiplicateur (23) est formé par une roue droite (25) couplée de façon solidaire en rotation à la sortie (10) de la transmission à réglage continu (8) et par le troisième arbre (57) du deuxième engrenage à superposition (6).

10. Unité de boîte de vitesses (1) selon l'une des revendications 7 à 9, **caractérisée en ce que** les deux étages multiplicateurs fixes (15, 23) sont de mêmes dimensions.

11. Unité de boîte de vitesses (1) selon l'une des revendications 1 à 10, **caractérisée en ce que** le premier engrenage à superposition (11) et le deuxième engrenage à superposition (6) ont un dimensionnement tel que l'on puisse établir entre le troisième arbre (54) du premier engrenage à superposition (11) et le troisième arbre (57) du deuxième engrenage à superposition (6) un rapport de 1 à 2 à 3, de préférence de 1 à 2,4.

12. Unité de boîte de vitesses (1) selon l'une des revendications 1 à 11, **caractérisée en ce que** la transmission à réglage continu (8) est un engrenage à moyen de traction à friction (27) et le moyen de traction (30) utilisé est une bande poussée à maillons ou une courroie ou une chaîne.

13. Unité de boîte de vitesses (1) selon l'une des revendications 1 à 12, **caractérisée en ce que** le moyen de traction (30) est doté en continu sur sa circonférence extérieure (43) d'un profilage (44) qui peut être mis en prise avec un profilage complémentaire (45) sur la circonférence extérieure (46) de l'organe de transmission (42).

14. Unité de boîte de vitesses (1) selon la revendication 13, **caractérisée en ce que** l'organe de transmission (42) est coaxial et solidaire en rotation de l'arbre d'entrée d'engrenage (2) ou parallèle à celui-ci et il est prévu, pour maintenir la tension sur le moyen de traction (30), un engrenage pivotant (48) pour faire pivoter les dispositions de disques (28, 29) autour de l'organe de transmission (42).

15. Unité de boîte de vitesses (1) selon la revendication 13, **caractérisée en ce que** l'organe de transmission est coaxial et solidaire en rotation de l'arbre d'entrée d'engrenage (2) ou parallèle à celui-ci et le moyen de traction (30) est associé, pour maintenir la tension, à un dispositif tendeur (47) supporté de manière coulissante ou pivotante.

16. Unité de boîte de vitesses (1) selon l'une des revendications 1 à 15, **caractérisée en ce que** les moyens (40) pour contrôler le rapport de multiplication sur la transmission à moyen de traction (27) comprennent des actionneurs pour modifier les distances des différentes dispositions de disques (28, 29).

17. Unité de boîte de vitesses (1) selon l'une des revendications 1 à 16, **caractérisée en ce que** des moyens sont prévus en outre pour réaliser l'inversion du sens de rotation.

18. Unité de boîte de vitesses (1) selon la revendication 17, **caractérisée en ce que** les moyens comprennent un ensemble de changement de vitesses à vis sans fin.

19. Unité de boîte de vitesses (1) selon l'une des revendications 1 à 18, **caractérisée en ce que** l'entrée d'engrenage (2) est précédée d'un élément de démarreur.

20. Disposition de boîte de vitesses selon la revendication 19, **caractérisée en ce que** l'élément de démarreur est construit comme un convertisseur vitesse-couple hydrodynamique ou comme un embrayage hydrodynamique.

21. Disposition de boîte de vitesses selon la revendication 20, **caractérisée en ce que** l'élément démarreur est associé à un convertisseur de couple à verrouillage.

22. Disposition de boîte de vitesses selon la revendication 19, **caractérisée en ce que** l'élément de démarreur est conçu comme un embrayage à disques multiples.

23. Disposition de boîte de vitesses selon la revendication 19, **caractérisée en ce que** l'élément de démarreur est construit comme un embrayage mécanique.
